# EUROPÄISCHE PATENTSCHRIFT

(11) **EP 1 924 372 B1**
(45) Veröffentlichungstag und Bekanntmachung des Hinweises auf die Patenterteilung: **20.04.2011**
(21) Anmeldenummer: 06846973.3
(22) Anmeldetag: 07.09.2006
(51) Int. Cl.: B22C 3/00, C23C 22/20, B22D 11/06

(54) **SCHUTZSCHICHT FÜR EINE KERAMISCHE OBERFLÄCHE IN EINEM GIESSWERKZEUG**
PROTECTIVE COATING FOR A CERAMIC SURFACE IN A CASTING TOOL
COUCHE DE PROTECTION POUR SURFACE EN CERAMIQUE D'UN OUTIL DE COULEE

(30) Priorität: 07.09.2005 DE 102005042473
(43) Veröffentlichungstag der Anmeldung: 28.05.2008
(73) Patentinhaber: KS Aluminium-Technologie GmbH, 74172 Neckarsulm (DE); GELITA AG, 69412 Eberbach (DE)
(72) Erfinder: LAUDENKLOS, Manfred, 61137 Schöneck (DE)
(74) Vertreter: Patentanwälte ter Smitten
(86) Internationale Anmeldenummer: PCT/EP2006/008734
(87) Internationale Veröffentlichungsnummer: WO 2007/062703

(56) Entgegenhaltungen:
- EP-A- 1 486 473
- EP-A2- 1 258 542
- WO-A-97/07909
- GB-A- 1 030 285
- JP-A- 2 120 397
- US-A- 4 529 028
- US-A- 6 051 058

## Beschreibung

Die Erfindung betrifft ein Trennmittel zur Herstellung einer Schutzschicht auf einer keramischen Oberflächen eines Gießwerkzeugs und eine mittels dieses Trennmittels hergestellte Schutzschicht für eine keramische Oberfläche eines Gießwerkzeugs, die mit einem flüssigen oder fließfähigem Aluminiumwerkstoff beaufschlagbar ist sowie ein Verfahren zur Erzeugung dieser Schutzschicht auf einer keramischen Oberfläche eines Gießwerkzeugs.

In den Herstellungs- und Verarbeitungsanlagen von Nichteisenmetallen finden keramische Werkstoffe unterschiedlichster Zusammensetzung und Eigenschaft eine breite Anwendung. Dies gilt insbesondere für thermisch und korrosiv stark beanspruchte Bereiche der Anlagen, also Bereiche, die in direktem Kontakt mit den Nichteisenmetallschmelzen stehen. Erst durch einen Einsatz keramischer Werkstoffe im Schmelzbetrieb wird eine wirtschaftliche und sichere Herstellung und Verarbeitung von Nichteisenmetallschmelzen möglich. Als keramische Materialien werden hierbei solche eingesetzt, die oxidische und/oder oxidnitridische und/oder nitridische und/oder karbidische Phasenanteile aufweisen.

Als Beispiele für den Einsatz solcher keramischen Werkstoffe sind hierbei Gießwerkzeuge und deren Gießgarnituren zu nennen, die speziell im Niederdruck und Schwerkraftguss ihren Einsatz finden. Für all diese Bauteile gilt eine Schusszahl abhängige Lebensdauer. Unterstützt wird der Verschleiß, durch die hohen Temperaturen und die dabei stattfindenden chemischen Wechselwirkungen zwischen Metallschmelze und Keramik. Metallschmelzen haben im schmelzflüssigen Zustand grundsätzlich eine hohe Affinität zu Sauerstoff, der aus der Gasatmosphäre oder auch aus sauerstoffhaltigen Komponenten der Keramik angeboten wird. Dies gilt insbesondere für Aluminiumschmelzen und deren Legierungen, die gegenüber nicht-metallischen Verbindungen je nach thermodynamischen Gleichgewichtsbedingungen stark reduzieren, das heißt chemisch agieren. Daher werden als feuerfestes Auskleidungsmaterial für Aluminium-Gießwerkzeuge vorteilhafterweise solche Keramiken ausgewählt, die einen hohen Al₂O₃-Anteil aufweisen, oder Keramiken, die von der Metallschmelze entweder nicht oder nur schlecht benetzt werden. Bei diesen Keramiken handelt es sich insbesondere um SiN-Verbindungen, Bornitrit, siliziumnitridisch und siliziumoxinitridisch gebundene SiC-Keramiken, Kohlenstoffkeramiken, wie beispielsweise Graphit und Keramiken mit freiem Kohlenstoffanteil und Aluminiumtitanat. Um die Oberflächenaktivitäten dieser Bauteile des Gießwerkzeugs zu minimieren und die Thermoschockbeständigkeit zu erhöhen, werden Schutzschichten auf die keramischen Oberflächen der Bestandteile des Gießwerkzeuges aufgebracht. Vorzugsweise werden die nichtkonturgebenden Bereiche des Gießwerkzeuges aus keramischen Werkstoffen gefertigt.

Ein keramisches Wandelement für einen Gießprozess mit einer auf der Keramik aufgebrachten Schutzschicht ist aus dem amerikanischen Patent US 6,051,058 bekannt. Auf das keramische Wandelement ist eine erste dünne Schutzschicht auf Basis von Graphit oder Bornitrit in einer Dicke von 0,1 mm bis 0,2 mm aufgesprüht und darüber eine weitere Schutzschicht mit einer Dicke von 0,5 mm bis 2 mm aufgetragen. Die weitere oder zweite Schutzschicht besteht dabei aus einer Dispersion von Teilchen in einem Lösungsmittel, wobei die Teilchen im Wesentlichen aus dem bekannten Gleitwerkstoff Bornitrit und mindestens einem Metalloxid bestehen. Das Lösungsmittel aus einem wässrigen Gemisch ist auf Grundlage von Zirkon aufgebaut und enthält zusätzlich Aluminiummonophosphate. Über die Wirkung und Funktion der Aluminiummonophosphate in dem Schichtaufbau kann der Anmeldung keine nähere Information entnommen werden.

Der Erfindung liegt die Aufgabe zugrunde, eine Schutzschicht für keramische Oberflächen in Gießwerkzeugen bereitzustellen, die gute Gleiteigenschaften aufweist, die die Gussqualität nachhaltig beeinflusst und die gute Hafteigenschaften aufweist. Darüber hinaus ist es Aufgabe der Erfindung ein Trennmittel zur Herstellung einer derartigen Schicht bereitzustellen, das kostengünstig herzustellen und einfach und ohne größeren Vorrichtungsaufwand zu applizieren ist. Eine weitere Aufgabe der Erfindung ist es ein Verfahren bereitzustellen, das in der Lage ist eine derartige Schicht zu erzeugen und mittels derer Beschädigungen an der Schicht leicht ausheilbar sind.

In Bezug auf das Trennmittel wird die erfindungsgemäße Aufgabe dahingehend gelöst, dass das Trennmittels aus einem vollständig entsalzten Wasser gebildet ist und die folgenden Bestandteile enthält:
- einen Anteil eines oder mehrerer Mittel der Form Natriumlauge, Kaliumlauge und Aluminiumchlorid,
- einen phosphathaltigen Binder aus einer oder mehrerer der Verbindungen Monoaluminiumphosphat, Monozinkphosphat, Mono-Magnesiumphosphat, Natriumphosphat, Monomanganphosphat und Borphosphat, wobei der Anteil des Binders im Trennmittel kleiner oder gleich 5 Gew.-% ist
- einen Anteil an Strukturteilen einer oder mehrerer der Verbindungen Al₂O₃, SiO₂, TiO₂ und ZrO₂, in einer Fraktion von 80 nm bis 200 nm, wobei der Anteil der Strukturteile im Trennmittel kleiner oder gleich 10 Gew.-% ist und
- einen Anteil an Primärteilen einer oder mehrerer der Verbindungen Al₂O₃, SiO₂, ZnO, TiO₂, ZrO₂ und CeO in einer Fraktion von 2 nm bis 80 nm, wobei der Anteil der Primärteile im Trennmittel kleiner oder gleich 3 Gew.-% ist und
- einem Anteil eines organischen und/oder anorganischen Dispergiermittels, wobei der Anteil des Dispergiermittels im Trennmittel zwischen 0,5 Gew.-% und 5 Gew.-% liegt.

Dabei dienen die Natriumlauge, die Kaliumlauge und/oder das Aluminiumchlorid als Säurepuffer. Der Säurepuffer dient somit zur Verzögerung der Reaktion und zum gleichmäßigen Reaktionsablauf.

Das erfindungsgemäße Trennmittel bietet zum einen den Vorteil, dass es auf Grundlage von voll entsalztem Wasser kostengünstig herzustellen ist und andererseits aufgrund seiner Viskosität einfach auf das Werkzeug zu applizieren ist. Im einfachsten Fall kann das Trennmittel auf den keramischen Werkstoff aufgesprüht werden. Darüber hinaus entspricht das Trennmittel den Anforderungen an ein Trennmittel dahingehend, dass keine toxischen Substanzen enthalten sind, die nur mit hohen Kosten entsorgt werden können.

Vorzugsweise ist das Dispergiermittel Gelatine, wobei vorzugsweise in der Gelatine zumindest Calzium und Magnesium enthalten ist. Die Gelatine hat bevorzugt die Aufgabe, für einen Potentialen Ausgleich beim Dispergieren und zur Reaktionsbeschleunigung einen abgestimmten Beitrag zu leisten. Zur Erläuterung des Potentialausgleichs der Gelatine in der Binderphase wird hiermit auf das Richardson-Ellingham-Diagramm Bezug genommen, das einerseits bekannt ist und aus dem andererseits die Potentialdifferenzen der einzelnen eingesetzten chemischen Verbindung ablesbar sind. Magnesium und Kalzium als Hauptbestandteile der Gelatine, dienen hierbei zum Stabilisieren der Strukturteile und Primärteile beim Anlösen des heißen Grundwerkstoffs durch die Beschichtung, so dass eine Steuerung des Anbindens der Beschichtung an den Grundwerkstoff möglich ist.

Bevorzugt ist in dem Trennmittel ein Anteil an Gleitteilen aus einer oder mehrerer der Verbindungen Bornitrit, Magnesiumaluminiumsilikat und Molybdändisulfit, in einer Fraktion von 2 µm bis 15 µm enthalten, wobei der Anteil der Gleitteile im Trennmittel kleiner oder gleich 5 Gew.-% ist. Sie dienen als Gleitmittel beim Gießen und Verbessern die Entformbarkeit.

Die erfindungsgemäße Aufgabe in Bezug auf eine Schutzschicht für keramische Oberflächen in einem Gießwerkzeug wird dahingehend gelöst, dass die mittels des beschriebenen Trennmittels erzeugte Schutzschicht auf der keramischen Oberfläche des Gießwerkzeugs aus
- einem in die poröse, keramische Oberfläche infiltrierten und/oder diffundierten polymerisierten Phosphat aus einem oder mehreren der Verbindungen Monoaluminiumphosphat, Monozinkphosphat, Monomagnesiumphosphat, Natriumphosphat und Borphosphat,
- Strukturteilen einer oder mehrerer der Verbindungen Al₂O₃, SiO₂, TiO₂ und ZrO₂, in einer Fraktion von 80 nm bis 200 nm,
- Primärteilen der Form Al₂O₃, SiO₂, ZnO, TiO₂, ZrO₂, CeO, in einer Fraktion von 2 nm bis 80 nm, wobei die Primärteile in den Lücken zwischen den Strukturteilen eingelagert sind und in der Beschichtung zumindest Spuren eines organischen und/oder anorganischen Bindemittels, vorzugsweise Gelatine, nachweisbar sind und
- einem die Primärteile und die Strukturteile zumindest bereichsweise umschließenden Polymer aus polymerisiertem Phosphat aus einem oder mehreren der Verbindungen Monoaluminiumphosphat, Monozinkphosphat, Monomagnesiumphosphat, Natriumphosphat und Borphosphat
besteht.

Durch die erfindungsgemäße Schicht auf der keramischen Oberfläche werden die Anforderungen an eine langzeitstabile Schutzschicht besonders gut erfüllt. So wird der Metallfluss, der entscheidend von den Gleiteigenschaften des Gießwerkzeuges abhängt, dahingehend unterstützt, dass durch die aus der Schicht herausstehenden Strukturteile die Oxidhaut des Aluminiumwerkstoffes aufgebrochen wird und der flüssige Aluminiumwerkstoff unterhalb der Oxidschicht sehr leicht im Gießwerkzeug verteilbar ist. Die Schicht bietet somit optimale Eigenschaften für zum Beispiel einen Steigrohraufsatz, Rinnen oder das Gießgeschirr und somit im nicht konturgebenden Bereich eines Gießwerkzeuges.

In bevorzugten Ausführungsformen der Erfindung sind in der Beschichtung Gleitteile der Form Bornitrit und/oder Magnesiumaluminiumsilikat und/oder Molybdändisulfit, in einer Fraktion von 2 µm bis 15 µm vorhanden. Durch die verbesserten Gleiteigenschaften wird somit die Gussqualität nachhaltig und positiv beeinflußt, Die Gleitteile dienen als Gleitebene für das flüssige oder fließfähige Aluminium und unterstützen somit nachhaltig den Metallfluss. Sind die keramischen Oberflächen in den Breichen des Gießwerkzeuges angeordnet, die zu dem entformbaren Bereich des Gießwerkzeugs gehören, so dienen die Gleitteile darüber hinaus gleichzeitig zur Verbesserung der Entformbarkeit der gegossenen Bauteile.

Auf der Oberfläche, die bevorzugt natürlich die Seite der Gießform ist, die mit dem flüssigen Aluminiumwerkstoff in Kontakt steht, wird eine Schicht gebildet, die in einer Dicke von ca. 1 µm bis 80 µm vorliegt, bevorzugt werden Schichtdicken zwischen 30 µm und 50 µm aufgetragen. Die Schichtdicke ist abhängig vom Einsatzfall, das heißt vom Gießverfahren, wobei beim Druckguss die dünnsten und beim Niederdruck die dicksten Schichten verwendet werden. Bei dem Gegenstand der Erfindung werden bevorzugt Niederdruck- oder Schwerkraftgießverfahren eingesetzt. Bei diesen drucklosen Gießverfahren sind dicke Schichten vorteilhaft, da hier relativ langsam befüllt wird und ein langsames Abkühlen des Gussteils von Vorteil ist.

Die erfindungsgemäße Aufgabe in Bezug auf das Verfahren zur Erzeugung der beschriebenen Schutzschicht auf einer keramischen Oberfläche eines Gießwerkzeugs, wird dadurch gelöst, dass die Oberfläche zuerst mit einem beschriebenen Trennmittel beaufschlagt wird und anschließend die Oberfläche auf eine Temperatur von mindestens 200°C erwärmt wird, so dass eine chemische Bindung des Phosphats mit der Keramik und eine Polymerisation des Binders erfolgt. Durch die Erwärmung polymerisiert das Phosphat und die dabei gebildeten Polymere bilden eine fest haftende Schicht. Vorteilhaft hierbei ist, dass das Trennmittel, das aus einem vollständig entsalzten Wasser besteht, bei dieser Temperatur bereits vollständig aus der Schicht ausgedampft ist und es somit zu keiner oder nur sehr geringen Gasbildung beim Befüllen der Gießform kommt.

Sollte es darüber hinaus zu einer Beschädigung der Schicht kommen, so ist die Schicht sehr leicht ausheilbar, indem die Beschädigung in der Schicht mittels eines erneuten Applizierens der Oberfläche mit dem Trennmittel ausgeheilt wird, da nach einem erneuten Applizieren der Oberflächen mit dem Trennmittel Fehtstellen in der Schicht ausheilbar sind. Dabei werden neue Polymere gebildet, so dass ein vollständiges Ausheilen gewährleistet ist.

Während des Auftragens oder Aufsprühens des Trennmittels auf die keramische Oberflächen dringt das Trennmittel und somit die Phosphate in die Poren und Oberflächenunebenheiten bis in eine Tiefe von ca. 2 mm ein, wobei es auch in die Oberfläche des keramischen Bauteils hinein diffundiert, so dass eine Infiltrationsschicht gebildet ist, die eine fest haftende Schicht auf der keramischen Oberfläche bildet. Die Ketten der polymerisierten Phosphate reichen hierbei in die Oberfläche der Keramik hinein und verklammern sich dabei in der Oberflächenstruktur, wodurch die guten mechanischen Hafteigenschaften der polymerisierten Phosphate zum Grundwerkstoff begründet sind. Durch diese Art der festen Bindung der Schicht mit der Keramik wird vermieden, dass Rückstände auf der Keramik haften bleiben, was sich wiederum auf die Haltbarkeit bzw. Lebensdauer des Gießwerkzeuges auswirkt. Ein weiterer Vorteil der erfindungsgemäßen Schicht ist es, dass die Schicht bei höheren Temperaturen zu einer vermehrten Polymerisation angeregt wird. Hierdurch bilden sich längere Polymere, die einerseits die Haftung und den Zusammenhalt und andererseits die Elastizität der Schicht erhöhen. Die langzeitstabile und fest haftende Schicht ist somit bei höheren Temperaturen, wie sie während des Gießens auftreten, äußerst elastisch und kann den Formänderungen des Gießwerkzeuges elastisch und somit in vorteilhafter Weise ohne eine Beschädigung der Schicht folgen.

Die erfindungsgemäß eingesetzten Polymere polymerisieren bei ca. 200°C und besitzen eine Verglasungstemperatur von ca. 830 °C. Das flüssige Aluminium besitzt eine Temperatur von ca. 730 °C und reicht folglich nicht an die Verglasungstemperatur der Polymere heran. Es ist somit ein äußerst stabiles, für das Gießen von Nichteisenmetallen sehr gut geeignetes System als Schichtaufbau geschaffen.

Die Strukturteile der Form Al₂O₃ und/oder SiO₂ besitzen eine Größe von etwa 80 nm bis 200 nm und verhaken sich gegeneinander und bilden eine Schicht auf dem Grundwerkstoff. Hierbei ist der Begriff Strukturteile gezielt ausgewählt, da bevorzugt Teilchen eingesetzt werden, die nicht glatt sind, sondern eine strukturierte Oberfläche aufweisen. Die Strukturteile liegen in einer Größe von 80 bis 200 nm vor und stehen als Kanten aus der Schicht heraus. Vorteilhafterweise reißen die an ihrer Oberfläche stark strukturierten Strukturteile Risse in die Oxidschicht des vorbei fließenden flüssigen Aluminiums und zerreiben die Oxidhaut, so dass die Oxidhaut in kleinste Teile zerrieben wird und hierdurch nicht als Gitterfehler im Gefügeaufbau des Gussteils vorliegen. Ein Vorteil der erfindungsgemäß eingesetzten Strukturteile ist, dass die Oxidhaut zerstört und zerkleinert wird. Erfindungsgemäß bilden die Strukturteile mit einem Gew.-%-Anteil von bis zu 10 Gew.-% im flüssigen Trennmittel den größten Teil der Zusätze.

In die Lücken zwischen den Strukturteilen lagern sich die Primärteile, die in einer Größe von 2 nm bis 80 nm vorliegen bevorzugt und sehr leicht ein. Die Primärteile werden in vorteilhafter Weise dazu eingesetzt, die Lücken zwischen den Strukturteilen zu schließen, um somit eine sehr glatte Oberfläche zu erzeugen. Ein Anhaften des flüssigen Gießwerkstoffes ist nahezu unmöglich. Die Primärteile dienen somit als Füllmittel für die Zwischenräume.

Die sehr viel größeren Gleitteile des Bornitrits liegen zwischen den Strukturteilen in der Schicht und werden durch den Verbund aus Strukturteilen mit Polymeren gehalten. Sie liegen in einem Gew.-%-Anteil von bis zu 5 Gew.-% vor und sind fein verteilt zwischen die Strukturteile eingelagert und treten ebenfalls an der Oberfläche der Schicht aus. Aufgrund der Anzahl der Gleitteile, bilden diese nicht die größte Oberfläche der Schicht, sondern liegen feinst verteilt vor, so dass sie als Gleitmittel zum einen beim Gießen und andererseits zum Entformen des Gießwerkzeuges dienen.

Die so aufgebaute Schicht hat bereits aufgrund ihres fraktilen Aufbaus eine in sich verklammernde Wirkung, die wesentliche Bindung zwischen dem Grundwerkstoff und den Strukturteilen, den Primärteilen und den Gleitteilen wird aber durch das polymerisierte Phosphat geschaffen, das sich aus dem polymerisierten Monoaluminiumphosphat, Monozinkphosphat, Monomagnesiumphosphat, Natriumphosphat und/oder Borphosphat bildet. Die Ketten der Polymere stellen den Zusammenhalt zwischen dem keramischen Grundwerkstoff, den Strukturteilen, den Primärteilen und den Gleitteilen her. Je stärker die Bereiche des Gießwerkzeuges erhitzt werden, die mit den keramischen Werkstoffen versehen sind, je länger werden die Polymerketten, so dass bei steigender Temperatur die Elastizität der Schicht zunimmt.

Als wesentlich ist ebenfalls der Einsatz eines organischen Dispergiermittels zu werten. Eingesetzt wird insbesondere eine Gelatine, die unter dem Markennamen "Gelita" vertrieben wird. Hauptbestandteile dieser Gelatine sind Kalzium mit einem Anteil von 3950 mg je kg und Magnesium mit einem Anteil von 1500 mg je kg, der Rest besteht aus organischen und anorganischen Bestandteilen. Die Gelatine liegt mit Anteilen von 0,5 Gew.-% bis 5 Gew.-% im Trennmittel vor und ist somit zumindest in Spurenanteilen in der Beschichtung des Funktionsbauteils nachweisbar.

Das Entformen wird durch den Einsatz der erfindungsgemäßen Schicht in vorteilhafter Weise erleichtert, da zum Einen durch die Strukturteile und die glättend wirkenden Primärteile eine sehr glatte Oberfläche an der Schicht vorhanden ist und zum Anderen durch die Gleitteile ein Schmiermittel zur Verfügung steht.

## Patentansprüche

1. Trennmittel zur Herstellung einer Schutzschicht auf einer keramischen Oberfläche eines Gießwerkzeugs, **dadurch gekennzeichnet, dass** das Trennmittel aus einem voll entsalzten Wasser gebildet ist und die folgenden Bestandteile enthält:
- einen Anteil eines oder mehrerer Mittel der Form Natriumlauge, Kaliumlauge und Aluminiumchlorid,
- einen phosphathaltigen Binder aus einer oder mehrerer der Verbindungen Monoaluminiumphosphat, Monozinkphosphat, Mono-Magnesiumphosphat, Natriumphosphat, Monomanganphosphat und Borphosphat, wobei der Anteil des Binders im Trennmittel kleiner oder gleich 5 Gew.-% ist
- einen Anteil an Strukturteilen einer oder mehrerer der Verbindungen Al₂O₃, SiO₂, TiO₂ und ZrO₂ in einer Fraktion von 80 nm bis 200 nm, wobei der Anteil der Strukturteile im Trennmittel kleiner oder gleich 10 Gew.-% ist und
- einen Anteil an Primärteilen einer oder mehrerer der Verbindungen Al₂O₃, SiO₂, ZnO, TiO₂, ZrO₂ und CeO in einer Fraktion von 2 nm bis 80 nm, wobei der Anteil der Primärteile im Trennmittel kleiner oder gleich 3 Gew.-% ist und
- einem Anteil eines organischen und/oder anorganischen Dispergiermittels, wobei der Anteil des Dispergiermittels im Trennmittel zwischen 0,5 Gew.-% und 5 Gew.-% liegt.

2. Trennmittel nach Anspruch 1, **dadurch gekennzeichnet, dass** das Dispergiermittel Gelatine ist.

3. Trennmittel nach Anspruch 2, **dadurch gekennzeichnet, dass** in der Gelatine zumindest Calzium und Magnesium enthalten sind.

4. Trennmittel nach einem der vorhergehenden Ansprüche, **dadurch gekennzeichnet, dass** in dem Trennmittel ein Anteil an Gleitteilen aus einer oder mehrerer der Verbindungen Bornitrit, Magnesiumaluminiumsilikat und Molybdändisulfit, In einer Fraktion von 2 µm bis 15 µm enthalten ist, wobei der Anteil der Gleitteile im Trennmittel kleiner oder gleich 5 Gew.-% ist.

5. Schutzschicht für eine keramische Oberfläche eines Gießwerkzeugs, die mit einem flüssigen oder fließfähigem Aluminiumwerkstoff beaufschlagbar ist, **dadurch gekennzeichnet, dass** die mittels eines Trennmittels gemäß einem der vorhergehenden Ansprüche erzeugte Schutzschicht auf der keramischen Oberfläche des Gießwerkzeugs aus
- einem in die poröse, keramische Oberfläche infiltrierten und/oder diffundierten polymerisierten Phosphat aus einem oder mehreren der Verbindungen Monoaluminiumphosphat, Monozinkphosphat, Monomagnesiumphosphat, Natriumphosphat und Borphosphat,
- Strukturteilen einer oder mehrerer der Verbindungen Al₂O₃, SiO₂, TiO₂ und ZrO₂, in einer Fraktion von 80 nm bis 200 nm,
- Primärteilen der Form Al₂O₃, SiO₂, ZnO, TiO₂, ZrO₂, CeO, in einer Fraktion von 2 nm bis 80 nm, wobei die Primärteile in den Lücken zwischen den Strukturteilen eingelagert sind und in der Beschichtung zumindest Spuren eines organischen und/oder anorganischen Bindemittels, vorzugsweise Gelatine, nachweisbar sind und
- einem die Primärteile und die Strukturteile zumindest bereichsweise umschließenden Polymer aus polymerisiertem Phosphat aus einem oder mehreren der Verbindungen Monoaluminiumphosphat, Monozinkphosphat, Monomagnesiumphosphat, Natriumphosphat und Borphosphat besteht.

6. Schutzschicht für eine keramische Oberfläche eines Gießwerkzeugs nach Anspruch 5, **dadurch gekennzeichnet, dass** in der Beschichtung Gleittelle der Form Bornitrit und/oder Magnesiumaluminiumsilikat und/oder Molybdändisulfit, in einer Fraktion von 2 µm bis 15 µm vorhanden sind.

7. Schutzschicht für eine keramische Oberfläche eines Gießwerkzeugs nach einem der Ansprüche 5 oder 6, **dadurch gekennzeichnet, dass** die Schicht in einer Dicke von 1 µm bis 80 µm, vorzugsweise einer Dicke von 25 µm bis 60 µm, auf der Oberfläche vorhanden ist.

8. Schutzschicht für eine keramische Oberfläche eines Gießwerkzeugs nach einem der Ansprüche 5 bis 7, **dadurch gekennzeichnet, dass** das Gießwerkzeug ein Gießwerkzeug für ein Niederdruckguss- oder Schwerkraftgussverfahren ist.

9. Schutzschicht für eine keramische Oberfläche eines Gießwerkzeugs gemäß einem der Ansprüche 5 bis 8, **dadurch gekennzeichnet, dass** die keramische Oberfläche aus Al₂O₃ oder SiN oder SiC gebildet ist.

10. Verfahren zur Herstellung einer Schutzschicht nach einem der Ansprüche 5 bis 9 auf einer keramischen Oberfläche eines Gießwerkzeugs, **dadurch gekennzeichnet, dass**
- die Oberfläche zuerst mit einem Trennmittel gemäß einem der Ansprüche 1 bis 4 beaufschlagt wird und dass
- anschließend die Oberfläche auf eine Temperatur von mindestens 200° erwärmt wird, so dass eine chemische Bindung des Phosphats mit der Keramik und eine Polymerisation des Binders erfolgt.

11. Verfahren nach Anspruch 10, **dadurch gekennzeichnet, dass** eine Beschädigung in der Schicht mittels eines erneuten Applizierens der Oberfläche mit dem Trennmittel ausgeheilt wird.

## Claims

1. Release agent for producing a protective layer on a ceramic surface of a casting tool, **characterized in that** said release agent is formed from fully desalted water and includes the following components:
- a proportion of one or a plurality of agents in the form of sodium base liquor, potassium base liquor and aluminum chloride,
- a phosphatic binding agent in the form of one or a plurality of the following compounds: monoaluminum phosphate, monozinc phosphate, monomagnesium phosphate, sodium phosphate and boron phosphate, the proportion of binding agent in the release agent being less than or equal to 5% by weight,
- a proportion of structural parts in the form of one or a plurality of the compounds Al₂O₃, SiO₂, TiO₂ and ZrO₂ present in a fraction between 80 nm and 200 nm, the proportion of structural parts in the release agent being less than or equal to 10 % by weight, and
- a proportion of primary parts in the form of one or a plurality of the compounds Al₂O₃, SiO₂, ZnO, TiO₂, ZrO₂ and CeO present in a fraction between 2 nm and 80 nm, the proportion of primary parts in the release agent being less than or equal to 3 % by weight, and
- a proportion of an organic and/or inorganic dispersing agent, the proportion of the dispersing agent in the release agent being between 0.5 % by weight and 5 % by weight.

2. Release agent of claim 1, **characterized in that** the dispersing agent is gelatin.

3. Release agent of claim 2, **characterized in that** the gelatin contains at least calcium and magnesium.

4. Release agent of one of the preceding claims, **characterized in that** the release agent includes a content of lubricant parts in the form of one or a plurality of the compounds boron nitride, magnesium aluminum silicate and molybdenum disulfide, present in a fraction of 2 µm to 15 µm, the proportion of the lubricant parts in the release agent being less than or equal to 5 % by weight.

5. Protective layer for a ceramic surface of a casting tool, which can be subjected to a liquid or a flowable aluminum material, **characterized in that** the protective layer on the ceramic surface of the casting tool, which layer has been formed using a release agent of one of the preceding claims, comprises
- a polymerized phosphate infiltrated and/or diffused into the porous ceramic surface, the phosphate being in the form of one or a plurality of the following compounds: monoaluminum phosphate, monozinc phosphate, monomagnesium phosphate, sodium phosphate and boron phosphate,
- structural parts in the form of one or a plurality of the compounds Al₂O₃, SiO₂, TiO₂ and ZrO₂ present in a fraction between 80 nm and 200 nm,
- primary parts in the form of one or a plurality of the compounds Al₂O₃, SiO₂, ZnO, TiO₂, ZrO₂ and CeO present in a fraction between 2 nm and 80 nm, wherein the primary parts are deposited in the gaps between the structural parts and at least traces of an organic and/or inorganic binding agent, preferably gelatin, can be detected in the coating, and
- a polymer of polymerized phosphate that at least partially surrounds said primary parts and said structural parts, said phosphate being in the form of one or a plurality of the following compounds: monoaluminum phosphate, monozinc phosphate, monomagnesium phosphate, sodium phosphate and boron phosphate.

6. Protective layer for a ceramic surface of a casting tool of claim 5, **characterized in that** the coating contains lubricant parts in the form of boron nitride and/or magnesium aluminum silicate and/or molybdenum disulfide, present in a fraction of 2 µm to 15 µm.

7. Protective layer for a ceramic surface of a casting tool of one of claims 5 or 6, **characterized in that** the layer is present on the surface in a thickness of 1 µm to 80 µm, preferably in a thickness of 25 µm to 60 µm.

8. Protective layer for a ceramic surface of a casting tool of one of claims 5 to 7, **characterized in that** the casting tool is a casting tool for use in a low-pressure casting process or a gravity casting process.

9. Protective layer for a ceramic surface of a casting tool of one of claims 5 to 8, **characterized in that** the ceramic surface is formed from Al₂O₃ or SiN or SiC.

10. Method for producing a protective layer of one of claims 5 to 9 on a ceramic surface of a casting tool, **characterized in that**
- the surface is first subjected to a release agent of one of claims 1 to 4, and that
- the surface is afterwards heated to a temperature of at least 200° so that a chemical binding of the phosphate and the ceramic and a polymerization of the binding agent are obtained.

11. Method of claim 10, **characterized in that** damages to the layer are healed by reapplying the release agent onto the surface.

## Revendications

1. Agent de séparation pour la réalisation d'une couche de protection sur une surface en céramique d'un outil de coulée, **caractérisé en ce que** ledit agent de séparation est formé d'eau complètement dessalée et comprend les composants suivants:
- une proportion formée d'un ou de plusieurs agents sous forme de base de sodium, de base de potassium et de chlorure d'aluminium,
- un liant phosphaté sous forme d'un ou plusieurs des composés suivants: phosphate mono d'aluminium, phosphate mono de zinc, phosphate mono de magnésium, phosphate de sodium, phosphate mono de manganèse et phosphate de bore, la teneur du liant dans l'agent de séparation étant inférieure ou égale à 5 % en poids,
- une proportion formée par des parties structurelles d'un ou plusieurs composés suivants: Al₂O₃, SiO₂, TiO₂ et ZrO₂, présents dans une fraction comprise entre 80 nm et 200 nm, la teneur en parties structurelles dans ledit agent de séparation étant inférieure ou égale à 10 % en poids, et
- une proportion formée par des parties primaires d'un ou plusieurs composés suivants: Al₂O₃, SiO₂, ZnO, TiO₂, ZrO₂ et CeO, présents dans une fraction comprise entre 2 nm et 80 nm, la teneur en parties primaires dans ledit agent de séparation étant inférieure ou égale à 3 % en poids, et
- une proportion formée par un agent de dispersion organique et/ou anorganique, la teneur en agent de dispersion dans ledit agent de séparation étant comprise entre 0,5 % en poids et 5 % en poids.

2. Agent de séparation selon la revendication 1, **caractérisé en ce que** l'agent de dispersion est gélatine.

3. Agent de séparation selon les revendications 1 ou 2, **caractérisé en ce que** la gélatine comprend au moins de potassium et de magnésium.

4. Agent de séparation selon l'une quelconque des revendications précédentes, **caractérisé en ce que** ledit agent de séparation comprend une proportion de parties lubrifiantes formée d'un ou plusieurs des composés suivants: nitrite de bore, magnésium aluminium silicate et disulfure de molybdène, présents dans une fraction de 2 µm à 15 µm, la teneur en parties lubrifiantes dans ledit agent de séparation étant inférieure ou égale à 5 % en poids.

5. Couche de protection pour une surface céramique d'un outil de coulée, sur laquelle on peut appliquer un matériau aluminium liquide ou coulant, **caractérisée en ce que** la couche de protection, qui est formée sur la surface en céramique de l'outil de coulée à partir d'un agent de séparation selon l'une des revendications précédentes, comporte
- un phosphate polymérisé infiltré et/ou diffusé dans ladite surface céramique poreuse, le phosphate étant formé d'un ou de plusieurs des composés suivants: phosphate mono d'aluminium, phosphate mono de zinc, phosphate mono de magnésium, phosphate de sodium, phosphate mono de manganèse et phosphate de bore,
- des parties structurelles d'un ou plusieurs composés suivants: Al₂O₃, SiO₂, TiO₂ et ZrO₂, présents dans une fraction comprise entre 80 nm et 200 nm,
- des parties primaires sous forme de Al₂O₃, SiO₂, ZnO, TiO₂, ZrO₂ et CeO, présents dans une fraction comprise entre 2 nm et 80 nm, lesdites parties primaires étant déposées dans des interstices entre les parties structurelles, et au moins des traces d'un liant organique et/ou anorganique, de préférence gélatine, étant détectable dans le revêtement, et
- un polymère, au moins partiellement enveloppant les parties primaires et les parties structurelles, ledit polymère étant formé d'un phosphate polymérisé ou d'un ou de plusieurs des composés suivants: phosphate mono d'aluminium, phosphate mono de zinc, phosphate mono de magnésium, phosphate de sodium, phosphate mono de manganèse et phosphate de bore.

6. Couche de protection pour une surface en céramique d'un outil de coulée selon la revendication 5, **caractérisée en ce que** le revêtement comprend des parties lubrifiantes de forme de nitrite de bore et/ou magnésium aluminium silicate et/ou disulfure de molybdène, présents dans une fraction de 2 µm à 15 µm.

7. Couche de protection pour une surface en céramique d'un outil de coulée selon l'une quelconque des revendications 5 et 6, **caractérisée en ce que** la couche est réalisée sur la surface avec une épaisseur comprise entre 1 µm et 80 µm, de préférence avec une épaisseur comprise entre 25 µm et 60 µm.

8. Couche de protection pour une surface en céramique d'un outil de coulée selon l'une quelconque des revendications 5 à 7, **caractérisée en ce que** ledit outil de coulée est un outil de coulée à utiliser dans un procédé de coulée sous basse pression ou de coulée sous gravité.

9. Couche de protection pour une surface en céramique d'un outil de coulée selon l'une quelconque des revendications 5 à 8, **caractérisée en ce que** ladite surface en céramique est formée de Al₂O₃ ou SiN ou SiC.

10. Procédé de fabrication d'une couche de protection selon l'une quelconque des revendications 5 à 9 sur une surface en céramique d'un outil de coulée, **caractérisé en ce que**
- d'abord, on applique un agent de séparation selon l'une quelconque des revendications 1à 4 sur ladite surface, et
- après, on chauffe la surface à une température d'au moins 200°C, de sorte qu'une liaison chimique du phosphate avec la matière céramique et une polymérisation du liant sont réalisées.

11. Procédé selon la revendication 10, **caractérisé en ce qu'**une détérioration dans ladite couche est remédiée en appliquant de nouveau de l'agent de séparation sur la surface.
